# EUROPEAN PATENT SPECIFICATION

(11) **EP 0 638 019 B1**
(45) Date of publication and mention of the grant of the patent: **05.01.2000**
(21) Application number: 93911879.0
(22) Date of filing: 28.04.1993
(51) Int. Cl.: B32B 27/08, G03G 8/00, B41M 7/02, G03C 11/08

(54) **LAMINATES**
VERBUNDSTOFFE
STRATIFIES

(30) Priority: 29.04.1992 GB 9209216; 23.07.1992 GB 9215672
(43) Date of publication of application: 15.02.1995
(73) Proprietor: MURRAY, Nicholas John, Bishopthorpe, York YO2 1RY (GB)
(72) Inventor: MURRAY, Nicholas John, Bishopthorpe, York YO2 1RY (GB)
(74) Representative: Hill, Richard
(86) International application number: GB9300883
(87) International publication number: WO9322137

(56) References cited:
- EP-A- 0 159 854
- EP-A- 0 195 234
- EP-A- 0 479 295
- WO-A-90/12694
- GB-A- 2 119 310
- US-A- 4 048 736
- US-A- 4 378 392
- US-A- 4 387 129
- US-A- 5 126 797

## Description

### FIELD OF THE INVENTION

This invention relates to laminates, and more particularly laminates for use in the production of display systems and a process for the production of such laminates.

### BACKGROUND OF THE INVENTION

Display systems of the type used, for example, in signs and placards, posters, pictures, stickers, illuminated and reflective signs, are produced by a wide variety of techniques. A typical display system comprises a laminate of an optically transparent protective cover surface and a sheet of paper carrying the required information printed thereon. In general the printing process is expensive, particularly where colour printing is required, and for outdoor applications the paper must be protected against ingress of water.

It is known to laminate the printed paper sheet to the optically transparent cover surface using an optically transparent adhesive, and if necessary to apply a protective backing surface which may also be adhered to the paper.

Such laminates are widely used for advertising and display purposes, but because of the printing process are relatively expensive, particularly when only small numbers of prints are required.

Attempts have been made to produce laminates for advertising and display purposes by the use of heat transfer processes, but these are also relatively expensive and of limited application. Photographic processes have also been used, but only to a limited extent again because of the high costs involved.

Further difficulties have been introduced by prior art lamination processes which often require elevated temperatures and specialised lamination equipment unsuitable for single jobs or small customised runs.

WO-A-9012694 discloses deposition of an image on a substrate by an electrostatic process.

GB-A-2119310 discloses a laminated body, and method for making it, comprising a pre-printed polyester film adhered to a glass substrate.

There is therefore a need for a laminate comprising a protective optically transparent cover surface and a sheet carrying information to be displayed, which is both versatile and can be inexpensively produced in small or large quantities on relatively inexpensive equipment.

### BRIEF DESCRIPTION OF THE INVENTION

In the present invention there is provided a laminate, suitable for use as a display system, which comprises a polymeric film material having an image electrostatically deposited thereon, and a process for the production of such a laminate.

According to one aspect of the present invention there is provided a laminate comprising:
a first layer of polymeric film material having an image deposited on a first surface thereof by an electrostatic deposition process, the polymeric film material being capable of withstanding a temperature of at least 150°C without substantial instantaneous degradation, structural change, dimensional change or colour change , and having been treated in order to improve its image adhesion characteristics,
a second layer of optically transparent or translucent material, a first surface of the first layer being bonded to the second layer by a layer of optically transparent adhesive material,
the arrangement being such that the image on the first layer can be viewed through the second layer and the layer of optically transparent adhesive material.

In a second aspect the invention further provides a method of making a laminate which comprises:
depositing an image on a first surface of a first layer of polymeric film material by an electrostatic deposition process, the polymeric film material being capable of withstanding a temperature of at least 150°C without substantial instantaneous degradation, structural change, dimensional change or colour change and having been treated to improve its image adhesion characteristics,
removing adhesion inhibiting materials associated with the electrostatic deposition process from the film material surface whilst leaving the image undisturbed and
bonding a second layer of optically transparent or translucent material to the first surface of the first layer using an optically transparent adhesive material,
such that the image on the first layer can be viewed through the second layer and the optically transparent adhesive material.

In a further aspect the invention provides a method of making an adhesive laminate which comprises:
depositing an image on a first surface of a first layer of polymeric film material by an electrostatic deposition process, the polymeric film material being capable of withstanding a temperature of at least 150°C without substantial instantaneous degradation, structural change, dimensional change or colour change , and having been treated in order to improve its image adhesion characteristics,
removing adhesion inhibiting materials associated with the electrostatic deposition process from the film material surface whilst leaving the image undisturbed, and
applying a layer of optically transparent adhesive material to the first surface of the film material carrying the deposited image.

### DETAILED DESCRIPTION OF THE INVENTION

The first layer of polymeric film material preferably comprises a biaxially orientated polymeric film which may be formed from any suitable polymeric material such as, for example, a polyester, for example a polyacrylate, and more particularly a polyethylene terephthalate; or a methyl methacrylate or ethyl methacrylate polymer or copolymer; an olefin polymer, copolymer or block copolymer, for example polymers, copolymers and block copolymers of ethylene, propylene, butylene and other olefins with, if desired, other vinyl monomers; a polycarbonate; a polyethersulphone; a polyether ether ketone; or a polyurethane. A preferred polymer is polyethylene terephthalate and a suitable polyethylene terephthalate biaxially orientated film is produced by ICI under the trade mark Melinex (RTM), of which the particular grades preferred for use in the present invention are Melinex (RTM) 542 and Melinex (RTM) 054. These grades are pre-treated to improve the adhesion thereto by print and lacquer. Melinex (RTM) S is also suitable, but this is an untreated grade which needs to be treated to improve its image adhesion characteristics. The treatment may, for example, comprise coating with an organic polymer layer having improved image adhesion characteristics. Typical coatings which may be applied to a base film material to improve image adhesion are acrylic or cellulosic materials, which may also desirably contain a slip agent.

It is important that the first layer of polymeric film material should be thermally and dimensionally stable under the conditions used in electrostatic deposition processes. For example the temperature of an electrostatic copier roller is normally greater than 150°C, and can be from 160°C to 190°C. Although the first layer of polymeric film material is exposed to the heat of the roller for only a short time, it can become degraded, twisted and buckled, or even melt, if a polymer of too low a thermal and dimensional stability is chosen. Acetate films, for example, are not normally suitable for this reason. The first layer of polymeric film material must be capable of withstanding a temperature of at least 150°C and preferably at least 190°C without substantial instantaneous degradation, structural change, dimensional change, or colour change. Most preferably the film material should be such that it is thermally and dimensionally stable when exposed to a temperature of 200°C for at least 0.5 seconds.

The above preferred grades of film are normally transparent, but for many purposes an opaque, and especially a white opaque, film is preferred. Such white opaque films can be produced by applying to the polymeric film a coating layer comprising a filler such as silica or titanium dioxide dispersed in a suitable binder. Suitable white opaque coated polymeric films are produced by Imperial Graphic Products plc, Celfa AG, Renka (RTM), 3M (RTM) and Image Data (division of ICI). These companies also produce films in colours other than white for example by applying to the film coating layers comprising suitable colourants. These films may also be used in the present invention.

Even where an opaque grade of polymeric film is used, for example because an opaque filler has been included during manufacture, the film will usually still require a surface coating for image adhesion purposes, as previously discussed.

Although the invention will subsequently be described with reference to the use of polyester films, it is to be understood that it is not limited thereto, and any other suitable polymeric film having the appropriate surface characteristics and stability for electrostatic copying can also be used.

The image is deposited on the first polymeric film layer by an electrostatic and particularly a xerographic process, preferably by passing the polymeric film layer through a xerographic photocopier, especially a colour photocopier. Any suitable colour photocopier can be used in the process of the present invention, for example a laser copier, or digital copier, and the invention is not limited to any particular colour photocopying method or electrostatic technique for the production of the deposited image. Good results have been achieved using a Xerox (RTM) model 5775 and Canon (RTM) CLC, and these are the preferred machines, although other machines, using other electrostatic deposition techniques, may also be suitable.

Xerographic processes deposit the image onto the film as a powder or toner layer which is subsequently fixed by heating and treatment with a stabilizer containing a silicone material, for example a silicone oil.

I have discovered that the silicone-containing stabilizer remains on the surface of the xerographic electrostatically deposited image and inhibits adhesion to the polymeric film surface, such that conventional adhesives, particularly those that are active at ambient or relatively low elevated temperatures, cannot be used to form a laminate.

I have now discovered, surprisingly, that the silicone containing stabilizer material can be removed from the film sufficiently to obtain a substantial improvement in adhesion by gentle washing or wiping with a cleaning liquid or solution. without harming the image, and this is an important aspect of the method of the present invention. Clearly such a process could not be applied to normal xerographic paper, because it would soon absorb the cleaning liquid or solution and ultimately disintegrate, but it has been found that washing or wiping the film in accordance with the process of the invention enables the undesirable adhesion-inhibiting components of the xerographic image surface to be removed whilst leaving the image itself substantially unaffected.

In general any aqueous or non-aqueous liquid or solution capable of removing the adhesion-inhibiting materials from the film surface can be used, provided that the xerographic image is not disturbed and the film is not discoloured or degraded, but it is convenient and preferred to use an aqueous soap or detergent solution. In one method of carrying out this process of the invention, the film carrying the deposited image can be dipped or immersed in a bath of the cleaning liquid or solution, which can, for example, comprise a detergent solution containing several drops of a commercial liquid detergent such as Fairy Liquid (RTM) or Sunlight (RTM) Liquid per litre of water. The process can be carried out at ambient temperature, at a temperature that is "hand warm" or at any temperature that will not affect the film or the image, for example up to about 60°C or even more. More concentrated detergent solutions can also be used but this is not normally necessary.

For applications where the use of a washing process is inconvenient, for example if the method of the invention is to be used in areas with limited working space, the adhesion-inhibiting materials can still be removed to a satisfactory extent by the application of a suitable cleaning liquid or solution which can, for example, be an aqueous or non-aqueous solution containing a detergent or some other chemical compound capable of removing oily or silicone deposits from the surface of the deposited image. The solution can, for example, be applied as a spray. Such a spray can, for example, be hand-held, and may have a hand pump trigger action. Suitable liquids and solutions are those that do not scratch or damage the surface of the image, are smear-free and stain-free, are non-toxic, and do not give off unpleasant or hazardous vapours and fumes.

The spray solution can, for example, be a solution of a detergent in a mixture of water and a suitable organic solvent, which may be, for example, an alcohol such as isopropyl alcohol, or an ether such as ethyl glycol mono butyl ether (also known as EGB). A variety of commercially available cleaning liquids and solutions can be used, but it is important that any liquid or solution should first be subjected to a trial to ensure that it does not contain any components likely to damage the image or the film.

A fine spray of the solution can be directed onto the surface of the image and the liquid then wiped away and the surface thoroughly dried using a clean, soft, lint free cloth. It is found that, with suitable treatment, which may be repeated if necessary, the deposits of adhesion-inhibiting materials may be satisfactorily removed.

It is also possible, with suitable cleaning liquids and solutions, to apply a few drops of the liquid or solution to a damp cloth and use this to wipe away the adhesion-inhibiting materials from the surface of the deposited image.

The second layer of optically transparent or translucent material comprises the protective cover surface for the image, and may comprise a biaxially orientated sheet or film of a suitable polymeric material, for example a polyester, an acrylic polymer, a polyethylene terephthalate, or a polycarbonate. The invention is not, however, limited to such materials, and other transparent or translucent sheet materials such as glass may also be used in certain applications. The sheet can be rigid or flexible depending on the application, and may be of any desired thickness. Where the second layer is translucent, that is to say not optically clear, the light transmission must still be sufficient for the image to be viewed through it, if necessary with illumination from the back of the laminate.

The optically transparent adhesive material should be capable of forming a permanent bond, and of adhering without leaving bubbles (pockets of air) in the laminate. It should of course be capable of adhering to the xerographic image comprising the toner used in the xerographic process. Suitable adhesives include acrylic-based resins such as methyl methacrylate and ethyl methacrylate, synthetic rubber-based adhesives, ethylene-propylene copolymers, propylene polymers, and ionomer resins and suitable grades are made by several manufacturers. Particularly good results have been obtained using an adhesive supplied as a film, which may have a protective overlay on one or both surfaces. Such adhesives are sold, for example, by Mactac (RTM) under the trade marks Macbond (RTM) (acrylic and rubber-based adhesives), Macmount (RTM) (acrylic and rubber-based adhesives), and Macfilm (RTM) (acrylic adhesives), all of which may be provided with protective overlays of polymeric film or paper. Good results have been obtained using Mactac (RTM) UV protective acrylic adhesive reference No. F2010.

Curing acrylic films such as Mactac (RTM) are preferred for certain applications because they permit the possibility of repositioning the components of the laminate within a few minutes of application, for example if the components have not been lined up correctly.

The adhesive is preferably one that will achieve a satisfactory bonding at ambient temperatures, that is to say room temperature, or at only slightly elevated temperatures, for example below 60° C.

Some protective cover films are supplied ready-coated with adhesive, for example Mactac, 100µm vinyl polymer film with Macal (RTM) 8199 acrylic adhesive, Mactac (RTM) PG7036, 36µm and Mactac (RTM) 7075, 75µm, polyester polymer films with acrylic adhesive, and PF-6000, a 420µm matt finish translucent polycarbonate film coated with adhesive.

The components of the laminate may be assembled by any suitable method, and in any order. In one preferred method the optically transparent adhesive material is applied to the second layer of optically transparent or translucent material in a first stage, and then the adhesive coated optically transparent or translucent material laminated to the polymeric film material carrying the image in the second stage. If the polymeric film material carrying the image is to have a backing applied thereto, this is preferably applied to the polymeric film material first, to avoid the possibility of the laminate curling. Lamination can be achieved by passing the materials through a pair of laminating rollers, or by any other convenient process. Suitable laminating rollers are produced by Sallmetall BV.

The laminates of the invention may be provided with a wide variety of backing surfaces, either for protection, or for adhering to a substrate, or to achieve special effects. For example, the laminate may be adhered to a substrate such as a metal, plastic, cardboard or woodblock backing sheet layer by the use of a double-sided adhesive film such as, for example, Stera-Tape (RTM). Preferably the double-sided adhesive film is provided with a protective overlay, whereby it is possible to produce self-adhesive stickers using the laminates of the present invention. Many other types of acrylic or rubber-based adhesive can of course be used for this application, and of course the adhesive may be applied as a coating from a solvent based system, or by any other convenient means. Good results have, however, been obtained using Stera-Tape (RTM) 4051 cross linked acrylic adhesive, Stera-Tape (RTM) 1091 modified acrylic adhesive and Stera-Tape (RTM) 4151 modified acrylic adhesive; and Stera-Tape (RTM) rubber adhesives 4471 and 3471. In some cases it is possible to obtain the backing sheet with the adhesive already adhered thereto and ready for use once its protective overlay is removed. In such cases a preferred lamination method comprises first depositing the image on a first surface of the film, then laminating a second surface of the film to the backing sheet, removing the adhesion inhibiting materials from the film surface, and finally laminating the second layer of optically transparent or translucent material to the first surface of the film.

An important use of the present invention is in the production of illuminated and reflective signs. In the case of illuminated signs, the first layer of polymeric film material may be a transparent or translucent material, such that the image is illuminated when a light is positioned behind the laminate, and the image can thus be viewed through the second layer of optically transparent material. In an alternative construction, the image is deposited on a first layer of transparent polymeric film material and this is laminated to a protective cover sheet and/or a backing sheet of translucent material through which the image can be illuminated.

Reflective signs can be produced by depositing the image on a first layer of transparent polymeric film material and providing a backing layer of a reflective material. Suitable reflective film materials for use as the reflective backing layer are produced by Mactac (RTM) under the registered trade marks Macmark and Maclite 1010, by 3M (RTM) under the name 3M Reflective, by Ciba-Geigy (RTM) under the trade mark Cibalite (RTM), and by other manufacturers.

Other types of backing which may be used include magnetic sheet materials which can be used to attach the laminate to metallic iron or steel surfaces, for example to form a magnetic sign or display.

The deposited image may be a composite produced by a combination of different processes. For example characters or letters may be applied by pressure transfer, such as by the Letraset (RTM) technique, or alternatively a black xerographic image may be produced on a transparent film and a metallic coating applied thereto using a heat transfer foil and passing the foil and film through a heated roller. This transfers the metallic material from the foil to the black areas of the xerographic image. This film can then be laminated, together with a film carrying a colour image, between protective surface and backing sheets, so that when viewed the metallic image, characters or letters stand out in front of the colour image (which may for example be a picture).

Compositions can be made using a computer screen, and transmitted to a xerographic colour copier using the appropriate software to produce the desired image.

An important advantage of the process of the present invention is that by the appropriate selection of materials the entire process can be carried out at room temperature with the use of very simple equipment.

Using the laminates and the process of the present invention, a wide variety of display systems, decorative and artistic pictures and designs can be quickly and economically manufactured in large or small numbers. Even individual items such as estate agents boards and other advertising signs can be readily produced. The invention may also be applied to produce decorative laminated articles and decorative laminates, and may also be used to replace photographic enlargements and reduce the usage of silver in the photo printing industry. Lampshades and other diffuser lights and displays can readily be produced.

The invention can also be used to produce signs adapted to adhere to, and be viewed through, glass such as e.g., shop windows. For example the optically transparent material comprising the protective cover surface for the image may itself have a surface which can adhere to a glass surface when pressed thereon. Alternatively, the protective cover surface in the laminate can comprise a release layer which can be removed to reveal the adhesive layer below. This can then be applied to the glass surface so that the glass surface becomes the protective cover surface for the laminate.

The invention is illustrated by the following Examples:

### EXAMPLE 1

This Example describes the production of a laminate according to the invention.

An opaque sheet of coated biaxially oriented polyethylene terephthalate Melinex (RTM) film having good toner acceptance is placed in a Canon colour photocopier and an image xerographically deposited thereon. The film is then washed in a warm aqueous solution of detergent. The film is dried with a soft lint-free cloth.

The film is then placed face down on a clean surface, the protective overlay is removed from one side of a film of Stera-Tape (RTM) 4051 cross-linked acrylic adhesive and the adhesive surface applied to the back of the film. The remaining protective carrier layer of the adhesive film is left in place.

A sheet of clear acrylic plastic is provided with a layer of Mactac (RTM) UV F2010 acrylic adhesive by removing one of the protective overlays from the adhesive and pressing the surfaces together.

The adhesive-backed Melinex (RTM) film is laid face up on a table and an edge of the acrylic sheet applied thereto with 2.5 cms of the adhesive on the sheet exposed at the contact edge region. The laminate is then passed through a pair of laminating rollers, spaced so as to apply gentle pressure to the laminate, gently removing the protective overlay between the acrylic sheet adhesive and the film carrying the image as the laminate passes into and through the rollers. Surplus film is trimmed with a sharp knife.

There is produced a laminate having a self-adhesive backing useful for many display purposes. The laminate can be applied to a substrate by passing the substrate, together with the laminate, through a pair of laminating rollers and removing the protective overlay on the self-adhesive backing as the laminate passes through the rollers. In this way signs having aluminium or plastic backing, or a magnetic sheet backing may be produced.

### EXAMPLE 2

The process of example 1 is repeated except that the image is xerographically deposited on clear transparent coated plastic film. When the laminate has been produced the protective overlay is removed from the backing adhesive and the laminate is applied to a reflective material having a foil backing, thereby producing a reflective sign.

### EXAMPLE 3

The process of example 1 is repeated except that there is interposed between the polymeric film carrying the image and the transparent protective surface layer a further transparent coated film layer. The further layer is passed through a black and white photocopier to deposit a black image thereon and is then passed through a pair of heated rollers together with a metallic heat transfer material, to transfer the metallic material to the black portions of the image. The transparent film carrying the metallic image is then sandwiched between the transparent protective surface and the film carrying the xerographic colour image and laminated with further layers of optically clear adhesive. In this way metallic lettering or other characters can be viewed together with the colour image to achieve special effects.

### EXAMPLE 4

The process of Example 1 is repeated except that the image is again produced on a clear transparent coated plastic film. When used with a reflective backing such as Maclite (RTM) 1010, Cibalite (RTM) or 3M (RTM) Reflective, this can produce a sign having all reflective colours except black.

### EXAMPLE 5

The process of Example 2 is repeated except that the reflective material is replaced with a translucent backing material. The resultant laminate can be illuminated from behind (backlit) to produce an illuminated sign or display.

### EXAMPLE 6

The process of Example 1 is repeated except that the washing step is omitted and the adhesion-inhibiting silicone materials are removed from the image by wiping with a damp cloth to which a few drops of Fairy Liquid (RTM) detergent have been applied. The film is then dried and treated as before to form a laminate.

In this specification, (RTM) indicates that the word or words immediately preceding it are thought to be registered trade marks.

## Claims

1. A laminate characterised in that it comprises:
a first layer of polymeric film material having an image deposited on a first surface thereof by an electrostatic deposition process, the polymeric film material being capable of withstanding a temperature of at least 150°C without substantial instantaneous degradation, structural change, dimensional change or colour change , and having been treated in order to improve its image adhesion characteristics,
a second layer of optically transparent or translucent material, a first surface of the first layer being bonded to the second layer by a layer of optically transparent adhesive material,
the arrangement being such that the image on the first layer can be viewed through the second layer and the layer of optically transparent adhesive material.

2. A laminate according to Claim 1, in which the first layer of polymeric film material comprises a polyester.

3. A laminate according to any of the preceding Claims, in which the first layer of polymeric film material is transparent.

4. A laminate according to any of the preceding Claims, in which the first layer of polymeric film material is opaque or has an opaque coating applied thereto.

5. A laminate according to any of the preceding Claims, in which the image has been deposited by a xerographic process.

6. A laminate according to Claim 5, in which the image has been deposited by a xerographic colour photocopier.

7. A laminate according to any of the preceding Claims, in which the image is substantially devoid of adhesion-inhibiting silicone materials.

8. A laminate according to any of the preceding Claims, in which the second layer of optically transparent or translucent material comprises a polyester, an acrylic polymer, a polyethylene terephthalate, or a polycarbonate.

9. A laminate according to any of the preceding Claims, in which the optically transparent adhesive material comprises an acrylic-based resin adhesive, a synthetic rubber-based adhesive, an ethylene-propylene copolymer, a propylene polymer, or an ionomer resin-based adhesive.

10. A laminate according to any of the preceding Claims, in which the adhesive is one capable of bonding at ambient temperatures.

11. A laminate according to any of the preceding Claims, that is provided with a backing sheet adhered thereto.

12. A laminate according to Claim 11, wherein the backing sheet comprises a metal, cardboard, plastic or woodblock layer.

13. A laminate according to Claim 11, which comprises a first layer of transparent polymeric film material on which the image is deposited, the first layer being laminated to a backing sheet of translucent material.

14. A laminate according to Claim 11 or 12, in which the image is deposited on a first layer of transparent polymeric film material and the backing sheet comprises a layer of a reflective material.

15. A laminate according to any of Claims 11 to 14, in which the backing sheet comprises a magnetic sheet material.

16. A laminate according to any of the preceding Claims, which comprises a first layer of transparent polymeric film material on which the image is deposited, the first layer being laminated to a protective cover sheet of translucent material.

17. A laminate according to any of the preceding claims, in which the deposited image is a composite comprising an image produced by electrostatic deposition and an image produced by a different process.

18. A laminate according to Claim 17, in which the different process is pressure transfer or heat transfer.

19. Use of a laminate according to any of the preceding claims, in the manufacture of a display system, a decorative or artistic picture or design, an advertising sign or display, a lampshade or diffuser light, an illuminated or reflective sign, or a magnetic sign.

20. A laminate according to any of Claims 1 to 18, in which the second layer of optically transparent or translucent material has a surface which can adhere to glass.

21. A method of making a laminate which is characterised in that it comprises:
depositing an image on a first surface of a first layer of polymeric film material by an electrostatic deposition process, the polymeric film material being capable of withstanding a temperature of at least 150°C without substantial instantaneous degradation, structural change, dimensional change or colour change and having been treated to improve its image adhesion characteristics,
removing adhesion inhibiting materials associated with the electrostatic deposition process from the film material surface whilst leaving the image undisturbed and
bonding a second layer of optically transparent or translucent material to the first surface of the first layer using an optically transparent adhesive material,
such that the image on the first layer can be viewed through the second layer and the optically transparent adhesive material.

22. A method according to Claim 21, in which the image is deposited by a xerographic process.

23. A method according to Claim 22, in which the image is deposited by a xerographic colour photocopier.

24. A method according to Claim 21, which comprises washing or wiping the film which a cleaning liquid or solution.

25. A method according to Claim 24, in which the cleaning liquid or solution comprises an aqueous or non-aqueous detergent solution.

26. A method according to Claim 24 or 25 in which the film is dipped or immersed in a bath of the liquid or solution, of the film is sprayed with the liquid or solution.

27. A method according to any of Claims 21 to 26, in which the optically transparent adhesive material is in the form of an adhesive film, optionally with a protective overlay on one or both surfaces.

28. A method according to Claim 27, in which the adhesive film is a curing acrylic film.

29. A method according to any of Claims 21 to 28 that is carried out at ambient temperature

30. A method according to any of Claims 21 to 29, in which the optically transparent adhesive material is applied to the second layer of optically transparent or translucent material in a first stage, and the adhesive coated optically transparent or translucent material laminated to the first surface of the polymeric film material carrying the image in a second stage.

31. A method according to any of Claims 21 to 30, in which the polymeric film material carrying the image has a backing applied thereto.

32. A method according to Claim 31, in which the backing is applied by means of a double-sided adhesive film.

33. A method according to any of Claims 21 to 32, in which the image is deposited in a composite process comprising electrostatic deposition and a further process..

34. A method according to Claim 33, in which the further process is pressure transfer or heat transfer.

35. A method of making an adhesive laminate which comprises:
depositing an image on a first surface of a first layer of polymeric film material by an electrostatic deposition process, the polymeric film material being capable of withstanding a temperature of at least 150°C without substantial instantaneous degradation, structural change, dimensional change or colour change , and having been treated in order to improve its image adhesion characteristics,
removing adhesion inhibiting materials associated with the electrostatic deposition process from the film material surface whilst leaving the image undisturbed, and
applying a layer of optically transparent adhesive material to the first surface of the film material carrying the deposited image.

## Patentansprüche

1. Verbundstoff, dadurch gekennzeichnet, daß er umfasst:
eine erste Schicht aus polymerem Folienmaterial, auf der ein Bild auf einer ersten Oberfläche durch einen elektrostatischen Abscheidungsprozeß aufgebracht ist, das polymere Folienmaterial fähig ist, einer Temperatur von wenigstens 150°C ohne einen wesentlichen augenblicklichen Abbau, Strukturveränderungen, dimensionsmäßige Änderungen oder Farbveränderungen standzuhalten, und die behandelt wurde, um die Bildhaftungseigenschaften zu verbessern,
eine zweite Schicht aus optisch transparentem oder lichtdurchlässigem Material, wobei eine erste Oberfläche der ersten Schicht an die zweite Schicht durch eine Schicht aus optisch transparentem Haftmaterial gebunden ist,
wobei die Anordnung derart ist, daß das Bild auf der ersten Schicht durch die zweite Schicht und durch das optisch transparente Haftmaterial gesehen werden kann.

2. Verbundstoff nach Anspruch 1, bei dem die erste Schicht des polymerem Folienmaterials aus einem Polyester besteht.

3. Verbundstoff nach einem der vorangehenden Ansprüche, bei dem die erste Schicht des polymerem Folienmaterials transparent ist.

4. Verbundstoff nach einem der vorangehenden Ansprüche, bei dem die erste Schicht aus polymerem Folienmaterial opak ist oder auf dem eine opake Beschichtung aufgetragen ist.

5. Verbundstoff nach einem der vorangehenden Ansprüche, bei dem das Bild durch einen xerographischen Prozeß aufgebracht ist.

6. Verbundstoff nach Anspruch 5, bei dem das Bild durch einen xerographischen Farbphotokopierer aufgebracht ist.

7. Verbundstoff nach einem der vorangehenden Ansprüche, bei dem das Bild im wesentlichen ohne haftungsinhibierendes Silikonmaterial ist.

8. Verbundstoff nach einem der vorangehenden Ansprüche, bei dem die zweite Schicht aus optisch transparentem oder lichtdurchlässigem Material ein Polyester, ein Akrylpolymer, ein Polyethylen-Terephthalat, oder ein Polycarbonat umfaßt.

9. Verbundstoff nach einem der vorangehenden Ansprüche, bei dem das optisch transparente Haftmaterial einen Harzklebstoff auf Akrylbasis, einen Klebstoff auf Basis von synthetischem Gummi, ein Ethylen-Propylen-Copolymer, ein Propylenpolymer, oder einen Klebstoff auf Basis eines ionemeren Harzes umfaßt.

10. Verbundstoff nach einem der vorangehenden Ansprüche, bei dem der Klebstoff einer ist, der fähig ist, bei Umgebungstemperatur zu binden.

11. Verbundstoff nach einem der vorangehenden Ansprüche, der mit einer daran haftenden Stützplatte ausgestattet ist.

12. Verbundstoff nach Anspruch 11, wobei die Stülzplatte ein Metall, Pappe, Plastik oder eine Holzblock-Schicht umfaßt.

13. Verbundstoff nach Anspruch 11, welcher eine erste Schicht aus transparentem polymerem Folienmaterial umfaßt, auf dem das Bild aufgebracht ist, wobei die erste Schicht auf einer Stützplatte aus lichtdurchlässigem Material laminiert ist.

14. Verbundstoff gemäß Anspruch 11 oder 12, bei dem das Bild auf einer ersten Schicht aus transparentem polymerem Folienmaterial aufgebracht ist und die Stützplatte eine Schicht aus einem reflektierenden Material umfaßt.

15. Verbundstoff nach einem der Ansprüche 11 bis 14, bei dem die Stützplatte ein magnetisches Plattenmaterial umfaßt.

16. Verbundstoff nach einem der vorangehenden Ansprüche, welcher eine erste Schicht aus transparentem polymerem Folienmaterial umfaßt, auf welcher das Bild aufgebracht ist, wobei die erste Schicht auf eine schützende Deckplatte aus lichtdurchlässigem Material laminiert ist.

17. Verbundstoff nach einem der vorangehenden Ansprüche, bei dem das aufgebrachte Bild ein Verbund aus einem Bild, das durch elektrostatische Abscheidung hergestellt ist, und einem Bild, das durch einen anderen Prozeß hergestellt ist, umfaßt.

18. Verbundstoff nach Anspruch 17, bei dem der andere Prozeß Drucktransfer oder Hitzetransfer ist.

19. Verwendung eines Verbundstoffes nach einem der vorangehenden Ansprüche, bei der Herstellung eines Displaysystems, eines dekorativen oder künstlerischen Bildes oder Designs, eines Werbezeichens oder -displays, eines Lampenschirmes oder Streulichtes, eines beleuchteten oder reflektierenden Zeichens, oder eines magnetischen Zeichens.

20. Verbundstoff nach einem der Ansprüche 1 bis 18, bei dem die zweite Schicht aus optisch transparentem oder lichtdurchlässigem Material eine Oberfläche hat, welche an Glas haften kann.

21. Verfahren zur Herstellung eines Verbundstoffes, welches dadurch gekennzeichnet ist, daß es umfaßt:
Aufbringen eines Bildes auf einer ersten Oberfläche einer ersten Schicht aus polymerem Folienmaterial durch einen elektrostatischen Abscheidungsprozeß, wobei das polymere Folienmaterial fähig ist, einer Temperatur von wenigstens 150°C ohne einen wesentlichen augenblicklichen Abbau, Strukturveränderungen, dimensionsmäßige Änderungen oder Farbveränderungen standzuhalten und das behandelt wurde, um seine Bildhaftungseigenschaften zu verbessern,
Entfernen haftungsinhibierender Materialien, die mit dem elektrostatischen Abscheidungsprozeß verbunden sind, von der Folienmaterialoberfläche während das Bild ungestört bleibt und
Anbinden einer zweiten Schicht aus optisch transparentem oder lichtdurchlässigem Material an der ersten Oberfläche der ersten Schicht durch Verwendung eines optisch transparenten Haftmaterials,
so daß das Bild auf der ersten Schicht durch die zweite Schicht und das optisch transparente Haftmaterial gesehen werden kann.

22. Verfahren nach Anspruch 21, bei welchem das Bild durch einen xerographischen Prozeß aufgebracht wird.

23. Verfahren nach Anspruch 22, in welchem das Bild durch einen xerographischen Farbfotokopierer aufgebracht wird,

24. Verfahren nach Anspruch 21, welches Waschen oder Wischen des Filmes mit einer Reinigungsflüssigkeit oder Lösung umfaßt.

25. Verfahren nach Anspruch 24, in welchem die Reinigungflüssigkeit oder Lösung eine wässrige oder nicht wässrige Waschmittellösung umfaßt.

26. Verfahren nach Anspruch 24 oder 25, in welchem die Folie in ein Bad aus der Flüssigkeit oder Lösung eingetaucht wird, oder die Folie mit der Flüssigkeit oder Lösung besprüht wird.

27. Verfahren nach einem der Ansprüche 21 bis 26, in welchem das optisch transparente Haftmaterial in der Form einer haftenden Schicht oder fakultativ mit einer schützenden Deckschicht auf einer oder beiden Oberflächen vorliegt.

28. Verfahren nach Anspruch 27, in welchem die Haftschicht eine gehärtete Akrylschicht ist.

29. Verfahren nach einem der Ansprüche 21 bis 26, das bei Umgebungstemperatur durchgeführt wird.

30. Verfahren nach einem der Ansprüche 21 bis 29, in welchem das optisch transparente Haftmaterial auf eine zweite Schicht aus optisch transparentem oder lichtdurchlässigem Material in einer ersten Phase aufgetragen wird, und das haftende aufgetragene optisch transparente oder lichtdurchlässige Material auf die erste Oberfläche des polymeren Folienmaterials laminiert wird, die das Bild in einer zweiten Phase trägt,

31. Verfahren nach einem der Ansprüche 21 bis 30, in welchem das polymere Folienmaterial, das das Bild trägt, eine daran befestigte Unterstützung besitzt.

32. Verfahren nach dem Anspruch 31, in welchem die Unterstützung mittels eines doppelseitigen Haftfilms aufgebracht wird.

33. Verfahren nach einem der Ansprüche 21 bis 32, in welchem das Bild durch einen zusammengesetzten Prozeß aufgebracht wird, der eine elektrostatische Abscheidung und einen weiteren Prozeß umfaßt.

34. Verfahren nach Anspruch 33, in welchem der weitere Prozeß Druckübertragung oder Hitzeübertragung ist.

35. Verfahren zur Herstellung eines haftenden Verbundstoffes, welches umfaßt:
Aufbringen eines Bildes auf einer ersten Oberfläche einer ersten Schicht aus einem polymeren Folienmaterial durch einen elektrostatischen Abscheidungsprozeß, wobei das polymere Schichtmaterial fähig ist, einer Temperatur von wenigstens 150°C ohne einen wesentlichen augenblicklichen Abbau, Strukturveränderungen, dimensionsmäßige Änderungen oder Farbveränderungen standzuhalten, und das behandelt wurde, um seine Bildhaftungseigenschaften zu verbessern,
Entfernen haftungsinhibierender Materialien, die mit dem elektrostatischen Abscheidungsprozeß verbunden sind, von der Folienmaterialoberfläche, während das Bild ungestört bleibt, und
Aufbringen einer Schicht aus optisch transparentem Haftmaterial an die erste Oberfläche des Folienmaterials, die das aufgebrachte Bild trägt.

## Revendications

1. Stratifié caractérisé en ce qu'il comporte :
une première couche d'un matériau d'un film polymère sur une première surface duquel est déposée une image par une opération de dépôt électrostatique, le matériau du film polymère pouvant supporter une température d'au moins 150 °C sans dégradation instantanée, changement de structure, changement de dimension ou changement de couleur notable, et ayant été traité afin que les caractéristiques d'adhérence de l'image soient accrues,
une seconde couche d'un matériau optiquement transparent ou translucide, une première surface de la première couche étant collée à la seconde couche par une couche d'un matériau adhésif optiquement transparent,
la disposition étant telle que l'image portée par la première couche peut être observée à travers la seconde couche et la couche du matériau adhésif optiquement transparent.

2. Stratifié selon la revendication 1, dans lequel la première couche du matériau de film polymère comprend un polyester.

3. Stratifié selon l'une des revendications précédentes, dans lequel la première couche du matériau de film polymère est transparente.

4. Stratifié selon l'une quelconque des revendications précédentes, dans lequel la première couche du matériau de film polymère est opaque ou porte un revêtement opaque qui lui est appliqué.

5. Stratifié selon l'une quelconque des revendications précédentes, dans lequel l'image a été déposée par un procédé xérographique.

6. Stratifié selon la revendication 5, dans lequel l'image a été déposée par un photocopieur xérographique en couleurs.

7. Stratifié selon l'une quelconque des revendications précédentes, dans lequel l'image est pratiquement dépourvue de matériau à base de silicone qui inhibe l'adhérence.

8. Stratifié selon l'une quelconque des revendications précédentes, dans lequel la seconde couche du matériau optiquement transparent ou translucide comprend un polyester, un polymère acrylique, un téréphtalate de polyéthylène ou un polycarbonate.

9. Stratifié selon l'une quelconque des revendications précédentes, dans lequel le matériau adhésif optiquement transparent comprend un adhésif d'une résine à base acrylique, un adhésif d'une résine à base de caoutchouc de synthèse, un copolymère d'éthylène-propylène, un polymère de propylène ou un adhésif à base d'une résine ionomère.

10. Stratifié selon l'une quelconque des revendications précédents, dans lequel l'adhésif est d'un type capable de coller aux températures ambiantes.

11. Stratifié selon l'une des revendications précédentes, qui comporte une feuille de support qui lui est collée.

12. Stratifié selon la revendication 11, dans lequel la feuille de support comprend une couche de métal, de carton, de matière plastique ou de bois.

13. Stratifié selon la revendication 11, qui comprend une première couche d'an matériau de film polymère transparent sur laquelle l'image est déposée, la première couche étant stratifiée sur une feuille de support d'un matériau translucide.

14. Stratifié selon la revendication 11 ou 12, dans lequel l'image est déposée sur une première couche d'un matériau d'un film polymère transparent et la feuille de support est une couche d'un matériau réfléchissant.

15. Stratifié selon l'une des revendications 11 à 14, dans lequel la feuille de support est un matériau magnétique en feuille.

16. Stratifié selon l'une quelconque des revendications précédentes, qui comporte une première couche d'un matériau d'un film polymère transparent sur laquelle l'image est déposée, la première couche étant collée sur une feuille protectrice de couverture d'un matériau translucide.

17. Stratifié selon l'une quelconque des revendications précédentes, dans lequel l'image déposée est une image composite qui comprend une image produite par dépôt électrostatique et une image produite par un procédé différent.

18. Stratifié selon la revendication 17, dans lequel le procédé différent est un report par pression ou un report thermique.

19. Utilisation d'un stratifié selon l'une quelconque des revendications précédentes pour la fabrication d'un système d'affichage, d'un dessin ou graphisme décoratif ou artistique, d'une enseigne ou d'un dispositif d'affichage publicitaire, d'un abat-jour ou d'un diffuseur de lumière, d'une enseigne éclairée ou réfléchissante, ou d'une enseigne magnétique.

20. Stratifié selon l'une quelconque des revendications 1 à 18, dans lequel la seconde couche du matériau optiquement transparent ou translucide a une surface qui peut coller au verre.

21. Procédé de fabrication d'un stratifié, caractérisé en ce qu'il comprend :
le dépôt d'une image sur une première surface d'une première couche d'un matériau de film polymère par un procédé de dépôt électrostatique, le matériau de film polymère pouvant supporter une température d'au moins 150 °C sans dégradation instantanée, changement de structure, changement de dimension ou changement de couleur notable et ayant été traité afin que les caractéristiques d'adhérence de l'image soient accrues.
l'enlèvement des matériaux qui inhibent l'adhérence et sont associés au procédé de dépôt électrostatique de la surface du matériau du film sans que l'image soit perturbée, et
le collage d'une seconde couche d'un matériau optiquement transparent ou translucide sur la première surface de la première couche à l'aide d'un matériau adhésif optiquement transparent,
si bien que l'image portée par la première couche peut être observée à travers la seconde couche et le matériau adhésif optiquement transparent.

22. Procédé selon la revendication 21, dans lequel l'image est déposée par un procédé xérographique.

23. Procédé selon la revendication 22, dans lequel l'image est déposée par un photocopieur xérographique en couleurs.

24. Procédé selon la revendication 21, qui comprend le lavage ou l'essuyage du film avec une solution un liquide de nettoyage.

25. Procédé selon la revendication 24, dans lequel la solution ou le liquide de nettoyage comprend une solution détergente aqueuse ou non.

26. Procédé selon la revendication 24 ou 25, dans lequel le film est plongé ou immergé dans un bain de la solution ou du liquide, ou le film reçoit une pulvérisation de la solution ou du liquide.

27. Procédé selon l'une quelconque des revendications 21 à 26, dans lequel le matériau adhésif optiquement transparent est sous forme d'un film adhésif ayant éventuellement un revêtement protecteur sur l'une des deux faces ou les deux.

28. Procédé selon la revendication 27, dans lequel le film adhésif est un film acrylique qui durcit.

29. Procédé selon l'une quelconque des revendications 21 à 28, qui est mis en oeuvre à la température ambiante.

30. Procédé selon l'une quelconque des revendications 21 à 29, dans lequel le matériau adhésif optiquement transparent est appliqué à la seconde couche du matériau optiquement transparent ou translucide dans une première étape, et le matériau optiquement transparent ou translucide revêtu de l'adhésif est collé à la première surface du matériau du film polymère portant l'image dans une seconde étape.

31. Procédé selon l'une quelconque des revendications 21 à 30, dans lequel le matériau du film polymère portant l'image a un support qui lui est appliqué.

32. Procédé selon la revendication 31, dans lequel le support est appliqué par un film adhésif double face.

33. Procédé selon l'une quelconque des revendications 21 à 32, dans lequel l'image est déposée par un procédé composite comprenant un dépôt électrostatique et un autre procédé.

34. Procédé selon la revendication 33, dans lequel l'autre procédé est un report par pression ou thermique.

35. Procédé de fabrication d'un stratifié adhésif, qui comprend :
le dépôt d'une image sur une première surface d'une première couche d'un matériau de film polymère par un procédé de dépôt électrostatique, le matériau du film polymère pouvant supporter une température d'au moins 150 °C sans dégradation instantanée, changement de structure, changement de dimension ou changement de couleur notable, et ayant été traité afin que ses caractéristiques d'adhérence d'image soient meilleures.
l'enlèvement des matériaux inhibant l'adhérence associés au procédé de dépôt électrostatique, de la surface du matériau du film sans que l'image soit perturbée, et
l'application d'une couche d'un matériau adhésif optiquement transparent à la première surface du matériau du film portant l'image déposée.
